**Europäisches Patentamt**

(19) **European Patent Office**

**Office européen des brevets**

(11) Veröffentlichungsnummer: **0 057 742 B1**

(12) # EUROPÄISCHE PATENTSCHRIFT

(45) Veröffentlichungstag der Patentschrift:
27.11.85

(51) Int. Cl.⁴: **H 02 G 15/013**

(21) Anmeldenummer: **81105109.3**

(22) Anmeldetag: **01.07.81**

(54) **Kabelmuffe mit einem längsgeteilten Muffenrohr aus schrumpfbarem Material.**

(30) Priorität: **11.02.81 DE 3104916**

(43) Veröffentlichungstag der Anmeldung:
**18.08.82 Patentblatt 82/33**

(45) Bekanntmachung des Hinweises auf die Patenterteilung:
**27.11.85 Patentblatt 85/48**

(84) Benannte Vertragsstaaten:
**AT BE CH DE FR GB IT LI NL SE**

(56) Entgegenhaltungen:
**EP - A - 0 035 179**
**DE - A - 2 209 629**
**FR - A - 2 335 078**
**FR - A - 2 369 712**
**FR - A - 2 388 432**
**GB - A - 2 057 202**

(73) Patentinhaber: **Siemens Aktiengesellschaft, Berlin und München Wittelsbacherplatz 2, D-8000 München 2 (DE)**

(72) Erfinder: **Meitsch, Hans-Jürgen, Ing.grad., Odinstrasse 26, D-8034 Germering (DE)**
Erfinder: **Rost, Jan, Lindemoosweg 15, D-8131 Traubing (DE)**

## Beschreibung

Die Erfindung betrifft eine Kabelmuffe mit einem längsgeteilten Muffenrohr aus schrumpfbarem Material und je einem aus wärmeschrumpfbarem Material bestehenden, ein Formgedächtnis aufweisenden Füllstück an jeder Kabeleinführungsstelle, bei dem durch Öffnungen vom Umfang des Füllstückes her zugängliche Aufnahmeräume für die in die Kabelmuffe einzuführenden Kabel vorgesehen sind und wobei die Wände der Aufnahmeräume bei Wärmezufuhr durch Rückverformung an die Aussenkonturen der eingelegten Kabel angepasst werden, mit zwischen den Kabelmänteln und dem Muffenrohr angeordnetem Dichtungsmaterial.

Eine Anordnung zur gas- und feuchtigkeitsdichten Einführung elektrischer Kabel in längsgeteilte Kabelmuffen, bei der zwischen den Dichtungsraum begrenzenden Dichtungsmanschetten angeordnetes, elastisches oder vorzugsweise zähplastisches, klebendes Dichtungsmaterial zur Abdichtung der Kabelmäntel gegen die Kabelmuffe begrenzt wird, ist durch die DE-A-2 209 629 bekannt. Hier weist das Dichtungsmaterial die Form bereits vorgeformter, den Dichtungsraum ausfüllende scheibenförmige Füllstücke auf, wobei diese Füllstücke mindestens zwei von ihrem Umfang ausgehende Aussparungen zum Einlegen der abzudichtenden Kabel besitzen.

Diese Füllstücke können zum Beispiel auch aus einem Kernstück bestehen, auf das Dichtungsmaterial aufgebracht ist. Bei solchen Füllstücken ist jedoch von Nachteil, dass sie nur für einen geringen Durchmesserbereich von Kabeln anpassungsfähig gemacht werden können, wobei diese Anpassung lediglich durch mehr oder weniger starke Einlagen von Dichtungsmaterial erfolgen kann. Wenn das Füllstück selbst aus Dichtungsmaterial geformt ist, kann unter Umständen ein endgültiger Verformungsstillstand kaum erreicht werden. Bei der Verwendung von Füllstücken mit einem Kernstück und Dichtungsmaterial auf dessen Oberfläche ist jedoch, wie bereits erwähnt, die Anpassungsfähigkeit eingeschränkt, da das Kernstück in seiner starren Gestalt bestehen bleibt.

Weiterhin ist in der im Prioritätsintervall veröffentlichten DE-A 3 029 848 (GB-A 2 057 202) ein Kabelmuffenauslass für ein Spleissgehäuse beschrieben, welcher aus einem im wesentlichen zylindrischen Element mit wenigstens einem aus einer Rinne ausgebildeten einspringenden Abschnitt in der Längswand aus schrumpfbarem Material besteht. In diesen einspringenden Abschnitt bzw. in diese Rinne kann ein Kabel eingebracht werden. Weiterhin ist der Kabelmuffenauslass mit einer Befestigungseinrichtung versehen, die in das Ende des zylindrischen Elements zur Überbrückung einführbar ist und die die Längsöffnungen geschlossen hält. Der Überbrückungsabschnitt der Befestigungseinrichtung liegt hier im Gebrauchszustand über den endseitigen Querschnittsflächen und die Befestigungseinrichtung ist derart ausgebildet, dass sie im Gebrauchszustand auf einer Innenfläche wenigstens eines Teils der Längsaussenwand des zylindrischen Elements zusätzlich auf dem Teil aufliegt, der in den überbrückenden Verschluss gehüllt ist, wobei die Befestigungseinrichtung eine im wesentlichen starre Innenabstützung bildet. Bei einem derartigen Muffenauslass oder Muffenkopf handelt es sich um ein relativ starres Gebilde, welches in der Längsrichtung zur Einführung der Kabel schmale Schlitze aufweist, durch welche die Kabel in die Einführungsöffnungen bzw. Rinnen eingeführt werden müssen. Diese Einführung ist bei starren Kabeln wohl recht problematisch, vor allem dann, wenn mehrere Kabel in solche Kabeleinführungsöffnungen eines Muffenauslasses eingebracht werden müssen. Die Kabel müssen hierbei gut in ihrer Lage fixiert sein, da sich während der Schrumpfung nur die einspringenden Abschnitte an die eingeführten Kabel anpassen können, während das umgebende Muffenrohr in diesen Bereichen durch die eingebrachten zu Ringen ergänzten Befestigungselemente nicht in der Lage ist, an der Anpassung mitzuwirken. Dies bedeutet also, dass die Anpassung an die Kabel allein durch die einspringenden Abschnitte erfolgt, wobei die Bereiche entlang der schmalen Schlitze besonders gefährdet sind, da hier kaum eine Schrumpfung zur Anpassung erfolgen kann. Weiterhin ist von Nachteil, dass infolge des begrenzten Schrumpfungsverhältnisses nur ein relativ geringer Durchmesserbereich von Kabeln von einem Muffenauslass erfasst werden kann. Die Abdichtung der Längsschlitze entlang des Muffenrohres erfordert also äusserste Sorgfalt. Weiterhin sind bei der Montage eines solchen Muffenauslasses mehrere lose Einzelteile als Befestigungselemente einzuführen, mit denen eine mechanische Abnützung im Einführungsbereich erfolgt.

Eine Kabelmuffe der eingangs genannten Art ist in der FR-A-2 388 432 anhand der Fig. 7–11 beschrieben. Der vorliegenden Erfindung liegt die Aufgabe zugrunde, eine Kabelmuffe der eingangs genannten Art derart zu gestalten, dass das Einführen der Kabel in die Aufnahmeräume in besonders einfacher Weise erfolgen kann.

Diese Aufgabe wird bei einer Kabelmuffe der eingangs geschilderten Art dadurch gelöst, dass die Aufnahmeräume am äusseren Umfang der Füllstücke liegen und dass beim Füllstück in der Montageform die Öffnungen der Aufnahmeräume grösser sind als die Durchmesser der einzuführenden Kabel.

Die Kabeleinführung der Kabelmuffe nach vorliegender Erfindung aus einem längsgeteilten Muffenrohr sind mit Füllstücken versehen, welche nach einer Wärmebehandlung sich den eingeführten Kabeln möglichst gut anpassen und schliesslich eine ausreichende Abdichtung im Zusammenspiel mit geeigneten Dichtungseinlagen ergeben. Vorteile dieser Anordnungen sind darin zu sehen, dass die Kabel in einfacher Weise in den Kabeleinführungsbereichen eingelegt und montiert werden können und dass dann gleichzeitig mit der Schrumpfung des Muffenrohres die Anpassungen an die Kabel wie auch an das schrumpfende Muffenrohr erfolgt. Die Füllstücke sind aus vernetztem thermoplastischem Material und weisen ein Formgedächtnis auf, das heisst, sie sind zwangsweise einer Verformung unterzogen und erst bei Wärmezufuhr bilden sich diese Füllstücke in ihre ursprüngliche Form zurück. Diese ursprüngliche Form ist dabei so gewählt, dass sie bei der Zurückverformung in die Ursprungsform die eingelegten Kabel fest umschliessen und so automatisch die erforderliche Anpassung ergeben. Da nun in den Fugen entsprechendes Dichtungsmaterial, zum Beispiel plastische Dichtungsmasse oder ein bei Schrumpftemperatur reagierender Schmelzkleber, eingebracht ist, erfolgt bei diesem Vorgang gleichzeitig die erforderliche Abdichtung. Ein solches Füllstück ist zum Beispiel becherförmig ausgebildet, das heisst, es besteht aus einem entsprechend geformten Schlauchstück mit einer Abschlusswandung an einem Ende, das vorteilhaft als Spritzteil gefertigt werden kann. Nach der Herstellung oder während der Herstellung des Spritzteiles wird das Material einem Vernetzungsprozess ausgesetzt, wobei die Vernetzung auf chemischem Wege oder auch durch geeignete Bestrahlung erfolgen kann. Im Anschluss daran wird dieses Spritzteil aus seiner Grundform durch geeignete Verformung, zum Beispiel durch Dehnen mit entsprechenden Werkzeugen, in eine Montageform gebracht, die zum Einlegen von Kabeln geeignet ist. Dies bedeutet im wesentlichen, dass die Montageform des Füllstückes von seinem äusseren Umfang her entsprechende Aufnahmeräume aufweisen sollte, deren Öffnungen in diesem Zustand grösser sind als die Durchmesser der einzuführenden Kabel. Diese Montageform bleibt erhalten, bis das Füllstück nach Einlegen von Kabeln einer Erwärmung ausgesetzt wird. Durch entsprechende Ausgestaltungen und Formgebungen der Füllstücke kann ein breites Spektrum von Anwendungsfällen, zum Beispiel bezüglich der Anzahl von Kabeleinführungen, der Anpassung an das Muffenrohr oder ähnlichem überbrückt werden. Durch Lippenbildung bzw. sich verjüngenden Fortsätzen an den Rändern der Aufnahmeräume können die Übergänge praktisch ohne Abstufung überbrückt werden. Weiterhin kann durch entsprechende Kammerbildung mit Hilfe von Verstrebungen die Anpassung der Füllstücke bei der Rückbildung verbessert werden, so dass die Gefahr von Spaltbildungen entlang der gemeinsamen Berührungslinien zwischen den Kabeln, den Füllstücken und dem Muffenrohr erheblich verringert wird. Eine gute und gleichmässige Wärmeverteilung lässt sich bei derartigen Füllstücken durch Einlagerung von gut wärmeleitfähigen Elementen erreichen, so dass auch schlecht erreichbare Stellen im Inneren der becherförmigen Füllstücke ausreichend erwärmt werden können. Weiterhin ist der Einsatz von Stützkörpern innerhalb der Füllstücke möglich. Auf diese Weise kann die mechanische Festigkeit der Füllstücke erhöht werden. Ein weiterer Vorteil der Erfindung ist darin zu sehen, dass durch geeignete Formgebung des Ausgangsteils für ein Füllstück bei Nichtbelegung von Aussparungen des Füllstückes sogenannte Blindstopfen nicht nötig sind, da in einem solchen Fall automatisch die Rückbildung der Aufnahmeräume bis in den ursprünglichen Zustand erfolgt, wobei somit eine Abdichtung gegen das ebenfalls schrumpfende Muffenrohr zustande kommt. Weiterhin können Vorteile erreicht werden, wenn die Schrumpfteile, das heisst, das Material des Muffenrohres und das Material des Füllstückes bezüglich ihrer Schrumpftemperaturen verschieden voneinander sind. So kann zum Beispiel die Schrumpftemperatur des Materials für das Muffenrohr höher gewählt werden als die Schrumpftemperatur des Materials für das Füllstück oder auch umgekehrt, so dass bei Wärmezufuhr während des Schrumpfvorganges die Schrumpfung verschieden stark ist. Je nach Formgebung der einzelnen Teile lassen sich auf diese Weise optimale Schrumpfverhältnisse erreichen. So kann zum Beispiel erwünscht sein, dass zunächst die Anpassung des Füllstückes an die Kabel erreicht werden soll und dass erst dann die Anpassung des Muffenrohres erfolgt. Es kann jedoch auch der umgekehrte Fall besondere Vorteile ergeben, wenn zum Beispiel Wert darauf gelegt wird, dass zunächst die Erfassung und Fixierung der Kabel in den Aufnahmeräumen des Füllstückes durch das schrumpfende Muffenrohr erfolgen soll.

Weitere Schwierigkeiten werden durch eine Weiterbildung vorliegender Erfindung dadurch vermieden, dass das als Abdichtungselement ausgebildete Füllstück im aufgeschrumpften Zustand nur die Zwickelbereiche zwischen den eingeführten Kabeln ausfüllt und dort an den inneren Umfangsbereichen der Kabeln anliegt und dass die ausserhalb des Füllstückes verbleibenden äusseren Umfangsbereiche der Kabel vom Muffenrohr umschlossen sind.

Auf diese Weise bereitet das Einlegen der Kabel keinerlei Schwierigkeiten, da hier eine Dehnung oder Aufweitung des als Füllstück ausgebildeten Abdichtungselementes, wie dies jedoch bei den engen Schlitzen bekannter Muffenauslässe erforderlich ist, nicht erfolgen muss. Das Füllstück gemäss der Erfindung füllt nämlich im aufgeschrumpften Zustand im wesentlichen nur die Zwickelbereiche zwischen den eingeführten Kabeln aus. Ein solcher von dem Füllstück ausgefüllter Zwickelbereich ist nun seitlich jeweils durch einen Umfangsabschnitt eines Kabels und gegen das Muffenrohr hin am vorteilhaftesten etwa durch die Verbindungstangenten der Kabel begrenzt. Es ist jedoch vorteilhaft, die Verbindungsstege des Füllstückes, die sich gegen das umgebende Muffenrohr hin abstützen, etwas abweichend von der geraden Verbindungstangente in leichter Bogenform auszuführen, um auf diese Weise eine bessere Anpassungsform gegen das Muffenrohr hin zu erhalten.

Die vorliegende Erfindung wird nun anhand von elf Figuren näher erläutert.

Die Figur 1 zeigt die axiale Ansicht von einer Kabelmuffe gemäss der Erfindung mit einem Füllstück zwischen zwei eingeführten Kabeln.

Die Figuren 2 und 3 zeigen ein Füllstück für zwei Kabeleinführungen in der Grund- bzw. Montageform.

Die Figuren 4 und 5 zeigen wiederum ein Füllstück für zwei Kabeleinführungen, wobei bereits das Grundteil an den Enden der Aufnahmeräume Lippen zur Anpassung an den Übergangsbereichen aufweist.

Die Figuren 6 und 7 zeigen Ausführungsbeispiele von Füllstücken mit zusätzlichen Verstrebungen.

Die Figuren 8 und 9 zeigen jeweils die Grund- bzw. Montageform eines Füllstückes für eine Dreifachkabeleinführung.

Die Figuren 10 und 11 zeigen wiederum ein Füllstück mit Dreifacheinführungen, wobei an den Endbereichen der Aufnahmeräume Lippen angeformt sind.

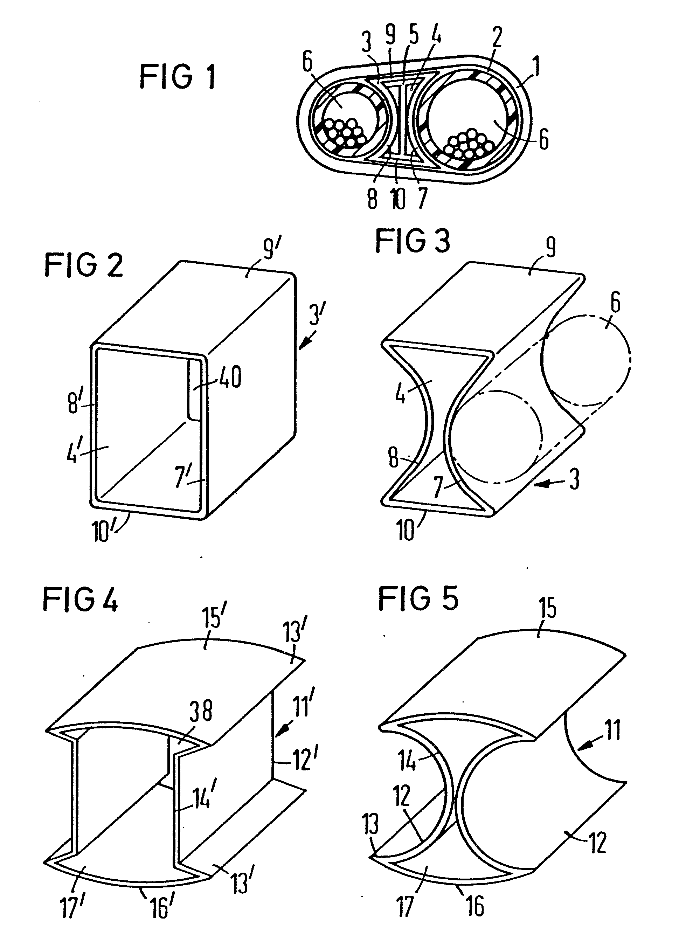

Aus Figur 1 geht nun der prinzipielle Aufbau der Kabelmuffe nach der Erfindung im Bereich der Kabeleinführungen hervor. Dabei wurde eine axiale Ansicht gewählt, da hier die betroffenen Einzelheiten besonders günstig hervortreten. Die Kabelmuffe besteht nun aus dem hier sichtbaren Füllstück 3 im Bereich der Kabeleinführungen und einem Muffenrohr aus thermoplastischem und schrumpfbarem Material, wobei dieses Muffenrohr 1 längsgeschlitzt oder schlauchförmig ausgebildet sein kann. Das Füllstück 3 hat die Querschnittsform von zwei gegeneinander gestellten C-Profilen 7 und 8, wobei die Enden dieser C-Profile über jeweils einen Steg 9 bzw. 10 miteinander verbunden sind. Auf diese Weise entsteht ein etwa X-förmiger Innenraum 4, in den in diesem Anwendungsfall ein Stützkörper 5 von etwa T-förmigem Querschnitt eingebracht ist. Hierdurch kann die mechanische Festigkeit des becherförmigen Füllstückes 3 erheblich vergrössert werden. Wie erwähnt, ist das Füllstück 3 becherförmig ausgebildet, das heisst, es weist an einem Ende eine quer zur Achsrichtung verlaufende Abschlusswandung auf, so dass hierdurch der Innenraum der Kabelmuffe nach aussen hin abgeschlossen ist. Die nach aussen gerichtete Öffnung des Innenraums 4 ermöglicht, dass die Wärme bis in den Innenraum hineingeführt werden kann, so dass auch dorthin eine gute Wärmeführung möglich ist. Das Füllstück 3 weist hier zwei von seinem Umfang nach innen ausgehende Aufnahmeräume 7 und 8 auf, in denen jeweils ein Kabel 6 eingeführt ist. Die hier gezeigte Anordnung ist im Endzustand dargestellt, das heisst, der Schrumpfvorgang des Muffenrohres 1 und die Rückbildung des Füllstückes 3, bzw. die Anpassung an die Kabel 6 und das Muffenrohr 1 ist bereits abgeschlossen, so dass die Kabel 6 in den Aufnahmeräumen 7 und 8 bereits eingepasst sind. Zwischen den Kabeln 6 und dem Füllstück 3, sowie zwischen den Kabeln 6 und dem bereits aufgeschrumpften Muffenrohr 1 ist eine Schicht aus geeignetem Dichtungsmaterial 2 eingebracht. Dieses Dichtungsmaterial 2 kann zum Beispiel aus thermoplastischem, plastischem Dichtungsmaterial bestehen. Auch die Anwendung von Schmelzklebern, welche etwa bei Schrumpftemperaturen reagieren, können in vorteilhafter Weise angewendet werden. Wenn ein längsgeschlitztes Muffenrohr 1 verwendet wird, so sind entlang dessen Längsränder entsprechende Verschlusseinrichtungen vorzusehen, die eine sichere Abdichtung in diesen Längsbereichen gewährleisten müssen. Bei der Einführung von Kabeln mit verschiedenen Durchmessern, wie dies hier dargestellt ist, erfolgt die Rückverformung des Füllstückes 3 in den ursprünglichen Zustand verschieden weit, so dass sich zum Beispiel eine gegenseitige Neigung der beiden Stege 9 und 10 zueinander ergibt. Die Anpassung des Muffenrohres 1 erfolgt dann auf dessen Aussenseite mit etwa der gleichen Neigung, wobei hier auf der einen Seite das Kabel mit dem grossen Durchmesser umschlossen wird. Dies ist bei der dargestellten Ausführung besonders vorteilhaft, da sich bei dem Schrumpfvorgang die Anpassung aller beteiligten Schrumpfteile automatisch ergibt. Unter Umständen werden bereits bei Einführungen von Kabeln mit sehr grossen Durchmesserunterschieden bereits Füllstücke verwendet, deren Stege bereits in der Montageform eine Neigung gegeneinander aufweisen. Dabei ist erkenntlich, dass das Füllstück 3 die Kabel 6 nur zum Teil umschliesst und dass die beiden Verbindungsstege 9 und 10 des Füllstückes 3 jeweils dem Verlauf der Verbindungstangenten zwischen den Kabeln in etwa folgen. Die vom Füllstück 3 nicht erfassten Umfangbereiche der Kabel 6 werden schliesslich vom Muffenrohr 1 weiter umschlossen, das dort direkt auf den freibleibenden Kabeln aufliegt. Das Füllstück 3 ist im Inneren mit einem Stützkörper 5 versehen, der hier als einteiliges, doppel-T-förmiges Stück fest eingebracht ist und dort einerseits als mechanische Abstützung und andererseits als Wärmeleitelement für die gleichmässige Wärmeverteilung während des Schrumpfvorganges dienen kann. Im Gegensatz zu den bekannten, im gesamten Muffenauslass ringförmig umfassenden Stützschalen sind die Stützkörper nach der Erfindung nur im Zwickelbereich zwischen den Kabeln vorgesehen. Dadurch ist sichergestellt, dass die Schrumpfkräfte des Muffenrohres direkt auf die freibleibenden Umfangsbereiche der Kabel einwirken können. Die Stützkörper bei der Erfindung verhindern lediglich, dass die Stege des Füllstückes im Zwickelbereich während des Schrumpfungsvorganges eingedrückt werden. Ein Zurückziehen der Ränder bzw. Lippen des Füllstückes infolge der Schrumpfkräfte ist dadurch ebenfalls vermieden. Die Stützkörper können jedoch auch als einfache Bleche ausgeführt werden, die jeweils parallel zu den Stegen bis in die Ecken des Füllstückes eingesetzt sind, das heisst, der gemeinsame, mittlere Verbindungssteg der vorher beschriebenen Ausführung entfällt. Auf diese Weise ist sichergestellt, dass sich die Ecken des Füllstückes während des Schrumpfvorganges ebenfalls nicht zurückbilden können. Damit ist auch hier ein hinreichend guter Übergang zwischen dem Füllstück und den eingeführten Kabeln gegeben. Diese Bleche können bereits im Füllstück enthalten sein, so dass eine zusätzliche Montage einfällt. Der Vorteil dieser relativ flexiblen Bleche liegt dabei darin, dass sie sich in weiten Bereichen durch Einwirkung der Schrumpfkräfte formen lassen, so dass die Anpassungsfähigkeit des Füllstückes kaum eingeschränkt ist.

Die Figuren 2 und 3 zeigen nun in Einzelheiten das in Figur 1 bereits erläuterte Füllstück 3 in der Montageform (Figur 3) und in seiner Ausgangsform 3' (Figur 2). Als Ausgangsform 3' wurde bei diesem Beispiel eine Becherform rechteckigen Querschnitts mit den beiden Seitenwänden 7' und 8', den beiden Stegen 9' und 10' sowie der rückwärtigen Abschlusswandung 40 gewählt.

Das Füllstück im Sinne der Erfindung ist auch dadurch gegeben, wenn die Abschlusswandung 40, die quer zur Einführungsrichtung als stirnseitiger Abschluss der Kabelmuffe dient, nicht an einem Ende, sondern im Inneren des Füllstückes angeordnet ist. Sie wird dabei etwa schräg liegend oder in der Art einer Ausbeulung ausgebildet, um die Verformungsfähigkeit des Füllstükkes während des Schrumpfvorganges möglichst nicht zu beeinflussen. Im montierten Zustand gewährt diese «Mittelwand» jedoch eine zusätzliche Abstützung, so dass hierdurch die mechanische Festigkeit ohne Zusatzmittel erhöht wird.

Diese Ausgangsform 3' wird zum Beispiel in einfacher Weise als Spritzteil aus thermoplastischem Material hergestellt, das beim Spritzvorgang vernetzt wird. Anschliessend bzw. im Zuge des weiteren Herstellungsverfahrens erfolgt die Umformung mittels geeigneter Werkzeuge in die Montageform 3. Dieser Vorgang wird vielfach auch als «Dehnen» bezeichnet. Nach dem Abkühlvorgang ist das Füllstück 3' in seiner Montageform gefestigt; das heisst, es ist mit einem Formgedächtnis versehen. Diese Montageform wird beibehalten, bis schliesslich im montierten Zustand unter Zuführung von Wärme die versuchte Rückbildung in seine Ausgangsform stattfindet. Dabei erfolgt nun die Anpassung an die Kabel, wobei die zu C-förmigen Aufnahmeräumen 7 und 8 verformten ursprünglichen Seitenwände 7' und 8' an ihren Enden eine grössere Zurückverformung erfahren können als die durch die Kabel 6 zurückgehaltenen inneren Bereiche. Je nach den Durchmessern der eingelegten Kabel 6, von denen nur eines angedeutet ist, werden die beiden Stege 9 und 10 ebenfalls mehr oder weniger zurückverformt. Durch die von der Kabelmuffe her gesehen nach aussen gerichtete Öffnung des Innenraumes 4 wird ermöglicht, dass die Wärmezufuhr auch in die inneren Bereiche des Füllstückes 3 in einfacher Weise erfolgen kann. Durch die Andeutung des Kabels 6 wird besonders deutlich, dass mit derartigen aus gegeneinander gestellten C-Profilen ausgebildeten Aufnahmeräumen 7 und 8 grosse Durchmesserbereiche von Kabeln erfasst werden können.

Anhand der Figuren 4 und 5 wird ein weiteres Füllstück 11 in seiner Montageform (Figur 5) erläutert, das durch den vorher beschriebenen «Dehnvorgang» aus dem Ausgangsteil 11' (Figur 4) hergestellt wurde. Bei diesem Füllstück 11 sind die Aufnahmeräume 12 wiederum aus den zwei zu gegeneinander gestellten C-Profilen verformten Seitenwänden 14 gebildet, in welche die einzuführenden Kabel eingelegt werden. Die beiden Stege 15 und 16 sind hier bogenfärmig gestaltet. Dies ergibt schliesslich beim Aufschrumpfen des Muffenrohres eine gleichförmigere Schrumpfung in diesen Einführungsbereichen, da sich hier in etwa eine Kreisform ausbildet. Weiterhin sind die Enden der C-förmigen Aufnahmeräume 12 zu nach aussen hin sich verjüngenden Lippen 13 ausgeformt. Dies hat den grossen Vorteil, dass der Übergang entlang der Berührungslinien kaum merkbar und nicht wie ohne diese Verjüngung stufenförmig erfolgt. Diese Massnahme begünstigt die Abdichtung in diesen Übergangsbereichen sehr wesentlich. Die Ausgangsform 11' für das Füllstück 11 weist wiederum im wesentlichen rechteckigen Querschnitt mit den Seitenwänden 14' auf, wobei allerdings die beiden Stege 15' und 16' bereits bogenförmig ausgeführt sind. An den Ecken der Ausgangsform 11' sind die Lippen 13' ebenfalls bereits vorgeformt. Dadurch erscheinen die späteren Aufnahmeräume 12 der Montageform 11 in der Ausgangsform 11' gewissermassen als breite Nuten 12', die jeweils von einer Seitenwand 14' und zwei angrenzenden Lippen 13' gebildet werden. Der Innenraum 17' erfährt durch den «Dehnvorgang» eine Verformung in den durch die Aufnahmeräume 12 und die Stege 15 und 16 begrenzten Innenraum 17, der wiederum am hinteren, nicht sichtbaren Ende eine Abschlusswandung 38 aufweist. In diesen Innenraum 17 lassen sich Stützkörper einbringen, welche die mechanische Festigkeit des Füllstückes 11 erhöhen. Diese Stützkörper sollten jedoch selbst eine gewisse Elastizität aufweisen und müssen so ausgebildet sein, dass trotz der Stützwirkung die erforderliche Verformung zur Anpassung nicht gehemmt ist. Zusätzlich kann ein solcher Stützkörper auch als Wärmeleiter für die inneren Bereiche dienen.

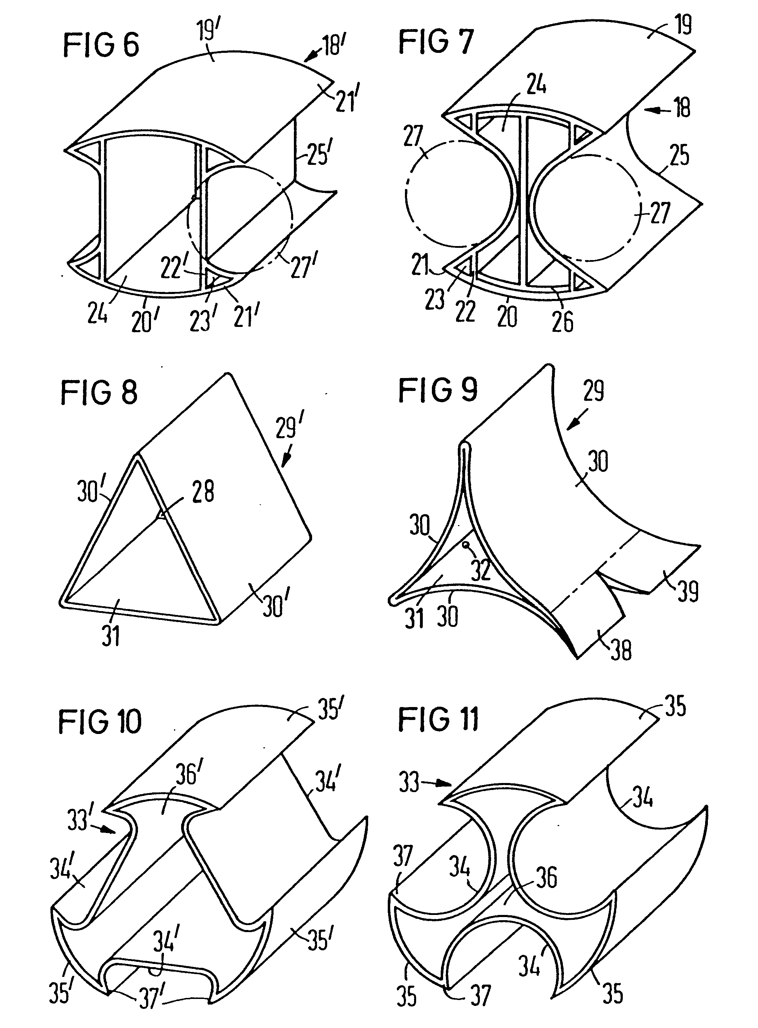

Das in den Figuren 6 und 7 dargestellte Füllstück 18 in Montageform (Figur 7) mit seinem Ausgangsteil 18' (Figur 6) ist als ein weiter modifiziertes Ausführungsbeispiel anzusehen. Hier sind durch Verstrebungen 22 bzw. 22', welche in Achsrichtung des Füllstückes verlaufen, weitere Hohlräume oder Kammern 23 bzw. 23' gebildet worden. Diese Verstrebungen 22 bzw. 22' ergeben eine Verbesserung der mechanischen Festigkeit des Füllstückes 18, wobei hierdurch auch gleichzeitig eine gewisse Schrumpfungsbeeinflussung erzielt werden kann. So ist wohl erkennbar, dass die Lippen 21 vom äusseren Rand her bis zu den Verstrebungen 22 hin beweglicher und damit verformbarer sein werden als die anschliessenden Bereiche nach den Verstrebungen 22 zum Inneren der Aufnahmeräume 25 hin. Dies kann zum Beispiel gerade bei Kabeln 27 mit relativ grossen Durchmessern erwünscht sein, da hier erhebliche Kräfte auftreten können. Die Aussenbereiche nahe an den Enden der C-Profile müssen hingegen weiterhin leicht anschmiegbar sein. So wird die Gefahr zur Undichtigkeit in den gemeinsamen, kritischen Berührungsbereichen wesentlich erniedrigt. Im übrigen sind hier die beiden Stege 19 und 20 bzw. 19' und 20' bogenförmig ausgebildet und im montagegerechten Füllstück 18 ist im Innenraum 24 ein doppel-T-förmiger Stützkörper 26 eingeführt. Die Herstellung und Montage dieser Füllstücke erfolgen in der bereits beschriebenen Weise.

Die Figur 8 zeigt das Ausgangsteil 29' des in Figur 9 dargestellten montagegerechten Füllstükkes 29, das für eine Dreifacheinführung von Kabeln geeignet ist. Für die Herstellung des Füllstückes 29, das für eine Dreifacheinführung von Kabeln geeignet ist. Für die Herstellung des Füllstückes 29 wurde eine Becherform dreieckigen Querschnittes mit einer rückwärtigen Abschlusswandung 28 und den drei Seitenwänden 30', welche den dabei entstehenden Innenraum 31 umschliessen, gewählt. Durch den «Dehnungsvorgang» wird dann das montagegerechte Füllstück 29 mit den zu den Aufnahmeräumen 30 verformten Seitenwänden 30' hergestellt. In der einfachsten Art sind die Kanten zwischen den Seitenwänden bzw. Aussparungen 30 ohne Fortsätze ausgebildet. Nach der Einlage der Kabel und der Umschrumpfung mit den Muffenrohren ergeben sich die bereits beschriebenen Anpassungs- und Dichtungsverhältnisse. Bei Belegung der Aufnahmeräume 30 mit Kabeln verschiedener Durchmesser wird bei dem Füllstück 29 eine Verschiebung des Mittelpunktes 32, der in der Figur 9 angedeutet ist, eintreten. Durch die Rückverformung von allen Seitenwänden bzw. Aufnahmeräumen 30 erfolgt jedoch der erforderliche Ausgleich bzw. die zur Dichtung führende Anpassung. In Figur 9 ist nun weiterhin als Beispiel entlang einer Kante, die strichpunktiert gezeichnet ist, erläutert, dass sich hier eine besonders gute Anpassung in den kritischen Berührungsbereichen durch Ausbildung von zum Ende hin sich verjüngenden Lippen 38 und 39 erfolgen kann. Da jedoch die Anpassung entlang der Kanten nach zwei Richtungen hin erfolgen muss, ist eine Teilung der Lippen notwendig. Diese Teilung ist hier zum Beipiel in der Mitte vorgesehen, so dass zwei gleiche Teile von Lippen 38 und 39 entstehen. Bei der Montage wird nun beispielsweise die sich verjüngende Lippe 38 in den ersten angrenzenden Aufnahmeraum 30 und die Lippe 39 zum zweiten angrenzenden Aufnahmeraum 30 hin umgebogen. Der Übersichtlichkeit wegen wurde in dieser Figur nur entlang einer Kante die Lippenbildung dargestellt. Durch die Verjüngung der Wanddicke wird ausserdem beim Aufschrumpfen des Muffenrohres eine kritische Stufenbildung vermieden.

In den Figuren 10 und 11 wird nun abschliessend ein Füllstück 33 bzw. 33' dargestellt, das von der Dreifacheinführung abgesehen, etwa dem Füllstück 11 nach Figur 5 entspricht. Dieses Füllstück 33 hat drei vom Umfang nach innen ausgehende, sternförmig angeordnete Aufnahmeräume 34, die durch den «Dehnungsvorgang» aus den nutartigen Vertiefungen 34' des Ausgangsteiles 33' (Figur 10) hergestellt wurden. Das Füllstück 33 weist hierdurch den Querschnitt von drei gegeneinander gestellten C-Profilen auf, deren aussen liegenden Enden jeweils über bogenförmige Stege 35 miteinander verbunden sind. Rückwärtig ist eine Abschlusswandung angebracht, so dass sich wiederum eine Becherform ergibt. Weiterhin sind die Enden der Aufnahmeräume 34 zu sich verjüngenden Lippen 37 ausgebildet, um die Anpassung in den Berührungsbereichen zu den Kabeln und zum Muffenrohr zu verbessern. In den Innenraum 36 können ebenfalls Stützkörper oder wärmerückstellfähige Elemente eingebracht werden.

Weiterhin sei darauf verwiesen, dass die Füllstücke gemäss der Erfindung auch aus Vollmaterial oder aus geschäumtem Material bestehen können, in die entsprechende Stützkörper oder auch wärmeleitfähige Materialien eingebracht werden können. Im allgemeinen wird das verwendete Material aller zum Schrumpfen beteiligten Gegenstände im Schrumpfverhalten bezüglich der Temperatur gleich sein. Dies ist jedoch nicht zwingend nötig und es können unter Umständen für die einzelnen Gegenstände Materialien mit verschiedenem Schrumpfverhalten bezüglich der Temperatur verwendet werden, wenn hierdurch besondere Effekte erzielt werden sollen. Im Falle der Nichtbelegung eines Aufnahmeraumes sind im allgemeinen keine besonderen Zusätze nötig, da sich die Öffnung selbsttätig durch die Rückverformung des Aufnahmeraumes und durch das Zusammenschrumpfen des aussen liegenden Muffenrohres während des Schrumpfvorgangs schliesst. Bei sehr grossen Aufnahmeräumen können unter Umständen entsprechende Blindstopfen eingesetzt werden, so dass Anpassungsverhältnisse wie bei Kabeln bestehen.

Bei diesen Erläuterungen anhand der Ausführungsbeispiele nach der Erfindung wurde bisher nur die Anpassung durch Rückverformung behandelt, nicht aber die Abdichtung entlang der angepassten Flächen zwischen den Füllstücken, den Kabeln und dem Muffenrohr. Da dies jedoch in allen Fällen in gleicher Weise erfolgt, kann dies abschliessend zusammen betrachtet werden.

Die Abdichtung der Flächen zwischen den eingeführten Kabelmänteln, den Füllstücken und dem umgebenden Muffenrohr erfolgt mit geeigneten Dichtungsmaterialen, die auf diesen Dichtungsflächen gleichmässig verteilt werden. So können zum Beispiel plastische, adhäsive Dichtungsmaterialien eingelegt werden, die den Vorteil haben, dass bei den Anpassungsvorgängen ein gewisser Ausgleich von Unregelmässigkeiten erfolgen kann. Diese Dichtungseinlagen können sowohl auf den Dichtungsflächen der Aufnahmeräume wie auch der Stege der Füllstücke aufgebracht werden. Noch montagefreundlicher ist wohl eine Beschichtung der Aussenflächen der Aufnahmeräume wie auch der Stege mit einem Schmelzkleber, der erst durch Wärmezufuhr während des Anpassungs- und Schrumpfverfahrens wirksam wird, da in diesem Fall die unter Umständen recht mühevolle Beschichtung am Montageort entfällt. In besonderen Einsatzfällen ist jedoch auch eine Kombination beider Dichtungsmittel möglich, wobei sich besonders eine in Achsrichtung des Füllstückes hintereinander liegende und abwechselnde Anordnung von plastischem Dichtungsmaterial und Schmelzkleber anbietet. Bei Verwendung von Schmelzklebern ist zusätzlich unter Umständen eine Variation bezüglich verschiedenen Temperaturverhaltens von Schrumpfmaterial und Klebermaterial interessant, die dann anwendbar ist, wenn gegenseitige Verzögerungen im Ablauf des Anpassungs- und Dichtungsvorganges erwünscht sind.

Weiterhin eignen sich die Füllstücke gemäss der Erfindung auch zur Einführung mehrerer Kabel innerhalb eines Aufnahmeraumes des Füllstückes. Es ist jedoch mit diesen Füllstücken auch möglich, Einführungskombinationen herzustellen, mit denen dann jeweils an der Stirnseite der Kabelmuffe eine Vielzahl von Kabeln eingeführt werden können, wie dies zum Beispiel bei Aufteilungsmuffen erforderlich ist. Diese Einführungskombinationen lassen sich durch einfaches Aneinanderreihen oder auch durch Ineinandergreifen der C-förmigen Aufnahmeräume der Füllstücke aufbauen, die dann schliesslich vom Muffenrohr umgeben werden. Die innerhalb einer derartigen Einführungskombination liegenden Kabel werden dann zum Beispiel nur von den Füllstücken selbst bzw. von Teilbereichen der Füllstücke umfasst, während die aussen liegenden Kabel wiederum nur zum Teil von einem Füllstück und zum anderen Teil vom umgebenden Muffenrohr erfasst und fixiert werden, wie dies bei der bereits beschriebenen einfachen Ausführung der Fall ist. Auf solche Weise lassen sich nun mit einer einzigen Ausführungsform von Füllstücken Mehrfach-Einführungen für Kabelmuffen aufbauen, die dann in etwa sternförmige oder auch annähernd runde Gestalt annehmen. Über eine solche Mehrfach-Einführung wird dann das schrumpfbare Muffenrohr aufgezogen und im daran anschliessenden Schrumpfungsprozess erfolgt die gegenseitige Anpassung, bis schliesslich die vollkommene Abdichtung erreicht ist.

## Patentansprüche

1. Kabelmuffe mit einem längsgeteilten Muffenrohr aus schrumpfbarem Material und je einem aus wärmeschrumpfbarem Material bestehenden, ein Formgedächtnis aufweisenden Füllstück (3, 11, 18, 29, 33) an jeder Kabeleinführungsstelle, bei dem durch Öffnungen vom Umfang des Füllstückes (3, 11, 18, 29, 33) her zugängliche Aufnahmeräume (7, 8, 12, 25, 30, 34) für die in die Kabelmuffe einzuführenden Kabel vorgesehen sind und wobei die Wände der Aufnahmeräume (7, 8, 12, 25, 30, 34) bei Wärmezufuhr durch Rückverformung an die Aussenkonturen der eingelegten Kabel angepasst werden, mit zwischen den Kabelmänteln und dem Muffenrohr angeordnetem Dichtungsmaterial, dadurch gekennzeichnet, dass die Aufnahmeräume (7, 8, 12, 25, 30, 34) am äusseren Umfang der Füllstücke (3, 11, 18, 29, 33) liegen und dass beim Füllstück (3, 11, 18, 29, 33) in der Montageform die Öffnungen der Aufnahmeräume (7, 8, 12, 25, 30, 34) grösser sind als die Durchmesser der einzuführenden Kabel.

2. Kabelmuffe nach Anspruch 1, dadurch gekennzeichnet, dass das Füllstück (3, 11, 18, 29, 33) becherförmig ausgebildet ist, und dass mindestens eine quer zur Einführungsrichtung verlaufende Abschlusswandung (11, 28, 38) angeordnet ist.

3. Kabelmuffe nach Anspruch 1, dadurch gekennzeichnet, dass das Füllstück (3, 11, 18, 29, 33) aus Vollmaterial besteht.

4. Kabelmuffe nach Anspruch 3, dadurch gekennzeichnet, dass das Füllstück (3, 11, 18, 29, 33) aus geschäumtem Material besteht.

5. Kabelmuffe nach einem der vorhergehenden Ansprüche, dadurch gekennzeichnet, dass das Füllstück (2, 11, 18) die Querschnittsform von zwei gegeneinander gestellten C-Profilen mit zwei jeweils zwei Enden der C-Profile verbindenden Stegen (9, 15, 19) aufweist.

6. Kabelmuffe nach Anspruch 5, dadurch gekennzeichnet, dass das Füllstück (3) den Zwickelbereich ausfüllt, der etwa von den gemeinsamen Verbindungstangenten der Kabel begrenzt wird, so dass die beiden Flächen der Stege (9, 15, 19) parallel zu den Verbindungstangenten verlaufen.

7. Kabelmuffe nach Anspruch 5, dadurch gekennzeichnet, dass die beiden Flächen der Stege (9, 15, 19) quer zur Einführungsrichtung der Kabel (6, 27) gegeneinander geneigt sind.

8. Kabelmuffe nach einem der vorhergehenden Ansprüche, dadurch gekennzeichnet, dass die Flächen der Stege (9, 15, 19) in Bogenform ausgebildet sind.

9. Kabelmuffe nach einem der vorhergehenden Ansprüche, dadurch gekennzeichnet, dass Verstrebungen (22) im Inneren des Füllstückes (18) ausgebildet sind.

10. Kabelmuffe nach einem der Ansprüche 1 bis 4, 8 oder 9, dadurch gekennzeichnet, dass das Füllstück (29, 33) die Querschnittsform von drei oder mehr gegeneinander gestellten C-Profilen mit jeweils die benachbarten Enden der C-Profile zusammenfassenden Stege (35) aufweist.

11. Kabelmuffe nach einem der Ansprüche 1 bis 4, dadurch gekennzeichnet, dass das Füllstück (29) eine sternartige Querschnittsform mit drei oder mehreren in Einführungsrichtung verlaufenden Aufnahmeräumen (30) auf dem Umfang aufweist.

12. Kabelmuffe nach einem der vorhergehenden Ansprüche, dadurch gekennzeichnet, dass die Aussenflächen der Aufnahmeräume (7, 8, 12, 25, 30, 34) mit plastischem adhäsivem Dichtungsmaterial (2) belegt sind.

13. Kabelmuffe nach einem der vorhergehenden Ansprüche, dadurch gekennzeichnet, dass die Aussenflächen der Stege (9, 15, 19, 35) mit plastischem, adhäsivem Dichtungsmaterial (2) belegt ist.

14. Kabelmuffe nach einem der Ansprüche 1 bis 11 oder 13, dadurch gekennzeichnet, dass die Aussenflächen der Aufnahmeräume (7, 8, 12, 25, 30, 34) mit Schmelzkleber beschichtet sind.

15. Kabelmuffe nach einem der Ansprüche 1 bis 12, dadurch gekennzeichnet, dass die Aussenflächen der Stege (9, 15, 19, 35) mit Schmelzkleber beschichtet sind.

16. Kabelmuffe nach einem der Ansprüche 1 bis 11, dadurch gekennzeichnet, dass die Aussenflächen des Füllstückes (3, 11, 18, 29, 33) mit in Achsrichtung hintereinanderliegenden und abwechselnden Beschichtungen aus Schmelzkleber bzw. adhäsivem Dichtungsmaterial versehen sind.

17. Kabelmuffe nach einem der vorhergehenden Ansprüche, dadurch gekennzeichnet, dass das Füllstück (3, 11, 18, 29, 33) wärmeleitfähige Elemente für gleichmässige Wärmeverteilung während des Schrumpfvorganges aufweist.

18. Kabelmuffe nach einem der Ansprüche 1 bis 17, dadurch gekennzeichnet, dass die Materialien vom Muffenrohr (1) und Füllstück (3, 11, 18, 29, 33) im Schrumpfverhalten bezüglich der Temperatur verschieden sind.

19. Kabelmuffe nach einem der vorhergehenden Ansprüche, dadurch gekennzeichnet, dass die Schmelzkleberbeschichtung im Inneren des Muffenrohres (1) bezüglich des Temperaturverhaltens verschieden ist von der Schmelzkleberbeschichtung des Füllstückes (3, 11, 18, 29, 33).

20. Kabelmuffe nach einem der vorhergehenden Ansprüche, dadurch gekennzeichnet, dass das Füllstück (3, 11, 18, 29, 33) im inneren Zwickelbereich zwischen den Kabeln Stützkörper (5, 26) aufweist.

21. Kabelmuffe nach einem der Ansprüche 1, 2 oder 12 bis 20, dadurch gekennzeichnet, dass das Ausgangsteil (3') des montagegerechten Füllstückes (3) becherförmig ausgebildet ist und rechteckige Querschnittsform aufweist.

22. Kabelmuffe nach einem der Ansprüche 1, 2 oder 12 bis 20, dadurch gekennzeichnet, dass das Ausgangsteil (11', 18') des montagegerechten Füllstückes (11, 18) becherförmig ist, im wesentlichen rechteckigen Querschnitt aufweist, an dessen Ecken abstehende Lippen (13', 21') angeformt sind, wobei jeweils zwei dieser Lippen (13', 21') zusammen mit jeweils einer Seitenwandung (14', 22') eine Art Nut (12', 25') für die späteren Aufnahmeräume (12, 25) bilden.

23. Kabelmuffe nach einem der Ansprüche 1, 2 oder 5 bis 20, dadurch gekennzeichnet, dass das Ausgangsteil des montagegerechten Füllstückes (29) becherförmig ausgebildet ist und eine dreieckige Querschnittsform aufweist.

24. Kabelmuffe nach einem der vorhergehenden Ansprüche 1, 2 oder 5 bis 20, dadurch gekennzeichnet, dass das Ausgangsteil des montagegerechten Füllstückes (33) etwa dreieckige Querschnittsform aufweist, wobei die Ecken zu voneinander abstrebenden Lippen (37') mit dazwischenliegenden Stegen (35') so ausgebildet sind, dass sich etwa C-förmige Nuten (34') für die späteren Aussparungen (34) ergeben.

25. Kabelmuffe nach einem der vorhergehenden Ansprüche, dadurch gekennzeichnet, dass das Füllstück (3, 11, 18, 29, 33) an den Rändern der Aufnahmeräume (7, 8, 12, 25, 30, 34) sich verjüngende, im aufgeschrumpften Zustand die Übergänge zwischen Füllstück (3, 11, 18, 29, 33), Kabel (6, 27) und Muffenrohr (1) ohne Abstufung überbrückende Fortsätze (13, 21, 37, 38, 39) aufweist.

26. Kabelmuffe nach einem der Ansprüche 1 bis 11, 13 oder 15 bis 25, dadurch gekennzeichnet, dass die ausserhalb der Aufnahmeräume (7, 8, 12, 25, 30, 34) des Füllstückes (3, 11, 18, 29, 33) verbleibenden, äusseren Umfangsbereiche der Kabel (6, 27) vom Muffenrohr (1) umschlossen sind.

27. Kabelmuffe nach einem der vorhergehenden Ansprüche, dadurch gekennzeichnet, dass die Abschlusswandung (40, 28, 38) des Füllstückes (3, 11, 18, 29, 33) in der Mitte des Füllstückes (3, 11, 18, 29, 33) angeordnet ist.

28. Kabelmuffe nach einem der vorhergehenden Ansprüche, dadurch gekennzeichnet, dass mehrere Füllstücke (3, 11, 18, 29, 33) zu Mehrfacheinführungen zusammengepackt sind, wobei die Füllstücke (3, 11, 18, 29, 33) mit ihren längsseitigen Rändern ineinander greifend angeordnet sind.

**Claims**

1. A cable sleeve with a longitudinally-split sleeve tube made of a shrinkable material and a respective filler element (3, 11, 18, 29, 33), which consists of a heat-shrinkable material and has a shape memory, at each cable insertion point, wherein receiving spaces (7, 8, 12, 25, 30, 34) are provided which are accessible through openings from the periphery of the filler (3, 11, 18, 29, 33) for the cables to be inserted into the cable sleeve, and wherein the walls of the receiving spaces (7, 8, 12, 25, 30, 34) are matched to the outer contours of the inserted cables through re-shaping by the supply of heat, a sealing material being arranged between the cable sheaths and the sleeve tube, characterised in that the receiving spaces (7, 8, 12, 25, 30, 34) are arranged on the outer periphery of the filler elements (3, 11, 18, 29, 33) and that with the filler element (3, 11, 18, 29, 33) in the shape for assembly, the openings of the receiving spaces (7, 8, 12, 25, 30, 34) are larger than the diameters of the cables to be inserted.

2. A cable sleeve as claimed in Claim 1, characterised in that the filler element (3, 11, 18, 29, 33) is cup-shaped, and that at least one closure wall (11, 28, 38) which runs transversely to the direction of insertion, is provided.

3. A cable sleeve as claimed in Claim 1, characterised in that the filler element (3, 11, 18, 29, 33) consists of a solid material.

4. A cable sleeve as claimed in Claim 3, characterised in that the filler (3, 11, 18, 29, 33) consists of a foamed material.

5. A cable sleeve as claimed in one of the preceding Claims, characterised in that the filler element (3, 11, 18) has the cross-sectional shape of two oppositely-positioned C-profiles with two crosspieces (9, 15, 19) which respectively connect two ends of the C-profiles.

6. A cable sleeve as claimed in Claim 5, characterised in that the filler element (3) fills the wedge-shaped region which is approximately bounded by the common connecting tangents of the cables, so that the two surfaces of the cross-pieces (9, 15, 19) run parallel to the connecting tangents.

7. A cable sleeve as claimed in Claim 5, characterised in that the two surfaces of the crosspiece (9, 15, 19) are tilted relative to one another transversely to the direction of insertion of the cables (6, 27).

8. A cable sleeve as claimed in one of the preceding Claims, characterised in that the surfaces of the cross-pieces (9, 15, 19) are in the form of arches.

9. A cable sleeve as claimed in one of the preceding Claims, characterised in that reinforcements (22) are formed inside the filler element (18).

10. A cable sleeve as claimed in one of Claims 1 to 4, 8 or 9, characterised in that the filler element (29, 33) has the cross-sectional shape of three or more oppositely-positioned C-profiles with crosspieces (35) which respectively join the adjacent ends of the C-profiles.

11. A cable sleeve as claimed in one of Claims 1 to 4, characterised in that the filler element (29) has a star-like cross-sectional shape with three or more receiving spaces (30) at the periphery which extend in the direction of insertion.

12. A cable sleeve as claimed in one of the preceding Claims, characterised in that the outer surfaces of the receiving spaces (7, 8, 12, 25, 30, 34) are coated with a plastic adhesive sealing material (2).

13. A cable sleeve as claimed in one of the preceding Claims, characterised in that the outer surfaces of the cross-pieces (9, 15, 19, 35) are coated with a plastic adhesive sealing material (2).

14. A cable sleeve as claimed in one of Claims 1 to 11 or 13, characterised in that the outer surfaces of the receiving spaces (7, 8, 12, 25, 30, 34) are coated with a fusion adhesive.

15. A cable sleeve as claimed in one of Claims 1 to 12, characterised in that the outer surfaces of the crosspieces (9, 15, 19, 35) are coated with a fusion adhesive.

16. A cable sleeve as claimed in one of Claims 1 to 11, characterised in that the outer surfaces of the filler element (3, 11, 18, 29, 33) are provided with alternating coatings of fusion adhesive and adhesive sealing material, which are arranged alternately one after the other in the axial direction.

17. A cable sleeve as claimed in one of the preceding Claims, characterised in that the filler element (3, 11, 18, 29, 33) has heat-conducting elements for even heat distribution during the shrinking process.

18. A cable sleeve as claimed in one of Claims 1 to 17, characterised in that the materials of the sleeve tube (1) and the filler elements (3, 11, 18, 29, 33) are different in their shrinkage behaviour in respect of temperature.

19. A cable sleeve as claimed in one of the preceding Claims, characterised in that the coating of fusion adhesive within the sleeve tube (1) is different from the coating of fusion adhesive of the filler elements (3, 11, 18, 29, 33) in respect of its behaviour with respect to temperature.

20. A cable sleeve as claimed in one of the preceding Claims, characterised in that the filler element (3, 11, 18, 29, 33) has supporting bodies (5, 26) in the inner vedge-shaped region between the cables.

21. A cable sleeve as claimed in one of Claims 1, 2 or 12 to 20, characterised in that the starting part (3') of the filler (3) ready for assembly is cup-shaped and has a rectangular cross-section.

22. A cable sleeve as claimed in one of Claims 1, 2 or 12 to 20, characterised in that the starting part (11', 18') of the filler element (11, 18) ready for assembly is cup-shaped, and has an essentially rectangular cross-section, at the corners of which projecting lips (13', 21') are formed, two of said lips (13', 21'), together with a lateral wall (14', 22'), forming a kind of groove (12', 25') for the subsequent receiving spaces (12, 25).

23. A cable sleeve as claimed in one of Claims 1, 2 or 5 to 20, characterised in that the starting part (29) of the filler element (29) ready for assembly is cup-shaped and has a triangular cross-section.

24. A cable sleeve as claimed in one of the preceding Claims 1, 2 or 5 to 20, characterised in that the starting part (33') of the filler (33) ready for assembly has an approximately triangular cross-section, where the edges of lips (37') which are spaced apart from one another and have intermediate cross-pieces (35') are so designed that approximately C-shaped grooves (34') are formed for the subsequent recesses (34).

25. A cable sleeve as claimed in one of the preceding Claims, characterised in that, at the edges of the receiving spaces (7, 8, 12, 25, 30, 34), the filler element (3, 11, 18, 29, 33) has converging extensions (13, 21, 37, 38, 39) which in the shrinkfitted state bridge the junctions between filler element (3, 11, 18, 29, 33), cable (6, 27) and sleeve tube (1) without steps.

26. A cable sleeve as claimed in one of Claims 1 to 11, 13 or 15 to 25, characterised in that the outer peripheral regions of the cables (6, 27) which remain outside the receiving spaces (7, 8, 12, 25, 30, 34) of the filler element (3, 11, 18, 29, 33), are enclosed by the sleeve tube (1).

27. A cable sleeve as claimed in one of the preceding Claims, characterised in that the closure wall (40, 28, 38) of the filler element (3, 11, 18, 29, 33) is arranged in the centre of the filler element (3, 11, 18, 29, 33).

28. A cable sleeve as claimed in one of the preceding Claims, characterised in that a plurality of filler elements (3, 11, 18, 29, 33) are packed together to form multiple insertions, the filler elements (3, 11, 18, 29, 33) being arranged so as to engage into one another at their longitudinal edges.

## Revendications

1. Manchon pour câbles comportant un tube subdivisé longitudinalement, qui est constitué en un matériau rétractable, et un organe de remplissage respectif (3, 11, 18, 29, 33) constitué en un matériau rétrécissable à chaud, conservant mémoire de sa forme et monté dans chaque zone d'insertion d'un câble, et dans lequel il est prévu des chambres de réception (16, 8, 12, 25, 30, 34) accessibles par des ouvertures à partir de la périphérie de l'organe de remplissage (3, 11, 18, 29, 33) et prévues pour des câbles devant être insérés dans le manchon à câbles, les parois des chambres de réception (16, 8, 12, 25, 30, 34) s'adaptant par déformation inverse, lors d'un apport de chaleur, aux contours extérieurs des câbles insérés, tandis qu'un matériau d'étanchéité est disposé entre les gaines de câbles et le tube, caractérisé par le fait que les chambres de réception (7, 8, 12, 25, 30, 34) sont situées sur le pourtour extérieur des organes de remplissage (3, 11, 18, 29, 33) et que, lorsque l'organe de remplissage (3, 11, 18, 29, 33) possède sa forme de montage, les ouvertures des chambres de réception (7, 8, 12, 25, 30, 34) sont d'une taille supérieure aux diamètres des câbles devant être insérés.

2. Manchon pour câbles selon la revendication 1, caractérisé en ce que l'organe de remplissage (3, 11, 18, 29, 33) est réalisé en forme de pot et qu'il est prévu au moins une paroi de fermeture (11, 28, 38) disposée transversalement par rapport à la direction d'insertion.

3. Manchon pour câbles, suivant la revendication 1, caractérisé par le fait que l'organe de remplissage (3, 11, 18, 29, 33) est constitué en un matériau massif.

4. Manchon pour câbles, suivant la revendication 3, caractérisé par le fait que l'organe de remplissage (3, 11, 18, 29, 33) est constitué en un matériau mousse.

5. Manchon pour câbles, suivant les revendications précédentes, caractérisé par le fait que l'organe de remplissage (3, 11, 18) possède la forme en coupe transversale de deux profilés en C assemblés dans des positions opposées et sont reliés, au niveau de leurs deux extrémités respectives, par des barrettes (9, 15, 19).

6. Manchon pour câbles, suivant la revendication 5, caractérisé par le fait que l'organe de remplissage (3) remplit l'espace de bourrage qui est limité approximativement par les tangentes de liaison commune aux câbles, de telle sorte que les deux surfaces des barettes (9, 15, 19) sont parallèles aux tangentes de liaison.

7. Manchon pour câbles, suivant la revendication 5, caractérisé par le fait que les deux surfaces des barrettes (9, 15, 19) sont inclinées l'une par rapport à l'autre, transversalement par rapport à la direction d'insertion des câbles (6, 27).

8. Manchon pour câbles, suivant l'une des revendications précédentes, caractérisé par le fait que les surfaces des barettes (9, 15, 19) sont réalisées avec la forme d'un arc de cercle.

9. Manchon pour câbles, suivant l'une des revendications précédentes, caractérisé par le fait que des entretoises (22) sont ménagées à l'intérieur de l'organe de remplissage (18).

10. Manchon pour câbles, suivant l'une des revendications 1 à 4, 8 ou 9, caractérisé par le fait que l'organe de remplissage (29, 33) possède la forme en coupe transversale de trois ou d'un plus grand nombre de profilés en C montés réciproquement en opposition et dont les extrémités voisines respectives sont réunies par des barrettes (35).

11. Manchon pour câbles, suivant l'une des revendications 1 à 4, caractérisé par le fait que l'organe de remplissage (29) possède une forme en coupe transversale en forme d'étoile comportant, sur son pourtour, trois ou un plus grand nombre de chambres de réception (30) s'étendant suivant la direction d'insertion.

12. Manchon pour câbles, suivant l'une des revendications précédentes, caractérisé par le fait que les surfaces extérieures des chambres de réception (7, 8, 12, 25, 30, 34) sont recouvertes par un matériau d'étanchéité plastique adhésif (2).

13. Manchon pour câbles, suivant l'une des revendications précédentes, caractérisé par le fait que les surfaces extérieurs des barrettes (9, 15, 19, 35) sont recouvertes par un matériau d'étanchéité plastique adhésif (2).

14. Manchon pour câbles, suivant l'une des revendications 1 à 11 ou 13, caractérisé par le fait que les surfaces extérieures des chambres de réception (7, 8, 12, 25, 30, 34) sont recouvertes par une colle à fusion.

15. Manchon pour câbles, suivant l'une des revendications 1 à 12, caractérisé par le fait que les surfaces extérieures des barrettes (9, 15, 19, 35) sont recouvertes par une colle à fusion.

16. Manchon pour câbles, suivant l'une des revendications 1 à 11, caractérisé par le fait que les surfaces extérieures de l'organe de remplissage (3, 11, 18, 29, 33) sont munies de revêtements constitués par une colle à fusion et par un matériau d'étanchéité adhésif et qui sont disposés les uns derrière les autres et se succèdent suivant la direction axiale.

17. Manchon pour câbles, suivant l'une des revendications précédentes, caractérisé par le fait que l'organe de remplissage (3, 11, 18, 29, 33) comporte des éléments thermoconducteurs permettant une répartition uniforme de la chaleur pendant le processus de rétrécissement.

18. Manchon pour câbles, suivant l'une des revendications 1 à 17, caractérisé par le fait que les matériaux du tube (1) et de l'organe de remplissage (3, 11, 18, 29, 33) ont des comportements de contraction différents en fonction de la température.

19. Manchon pour câbles, suivant l'une des revendications précédentes, caractérisé par le fait que le revêtement formé d'une colle à fusion situé à l'intérieur du tube (1) possède un comportement en fonction de la température, qui diffère de celui du revêtement formé de la colle à fusion de l'organe de remplissage (3, 11, 18, 29, 33).

20. Manchon pour câbles, suivant l'une des revendications précédentes, caractérisé par le fait que l'organe de remplissage (3, 11, 18, 29, 33) comporte des organes d'appui (5, 26) dans l'espace intérieur de bourrage entre les câbles.

21. Manchon pour câbles, suivant l'une des revendications 1, 2 ou 12 à 20, caractérisé par le fait que l'élément de sortie (3') de l'organe de remplissage (3) au montage est réalisé en forme de pot et possède une section transversale de forme rectangulaire.

22. Manchon pour câbles, suivant l'une des revendications 1, 2 ou 12 à 20, caractérisé par le fait que l'élément de sortie (11', 18') de l'organe de remplissage (11, 18) prêt au montage est en forme de pot et possède une section transversale essentiellement rectangulaire, au niveau des angles de laquelle se trouvent ménagés par moulage des rebords saillants (13' 21'), respectivement deux de ces rebords (13', 21') formant avec respectivement une paroi latérale (14', 22'), une sorte de rainure (12', 25') pour les chambres de réception (12, 25) formées ultérieurement.

23. Manchon pour câbles, suivant l'une revendications 1, 2 ou 5 à 20, caractérisé par le fait que l'élément de sortie (29) de l'organe de remplissage (29) prêt au montage est réalisé sous la forme d'un pot et possède une section transversale de forme triangulaire.

24. Manchon pour câbles, suivant l'une des revendications précédentes (1, 2 ou 5 à 20), caractérisé par le fait que l'élément de sortie (33') de l'organe de remplissage (33) prêt au montage possède une section transversale de forme approximativement triangulaire, dont les angles sont réalisés de manière à former des rebords arc-boutés (37') avec des barrettes intercalées (35') de telle sorte que l'on obtient des gorges (34') approximativement en forme de C pour les évidement (34) formés ultérieurement.

25. Manchon pour câbles, suivant l'une des revendications précédentes, caractérisé par le fait que l'organe de remplissage (3, 11, 18, 29, 33) comporte, au niveau des bords des chambres de réception (7, 8, 12, 25, 30, 34), des prolongements de forme rétrécie (13, 21, 37, 38, 39), qui, à l'état emmanché à chaud, remplissent les jonctions entre l'organe de remplissage (3, 11, 18, 29, 33), les câbles (6, 27) et le tube (1), sans aucun étagement.

26. Manchon pour câbles, suivant l'une des revendications 1 à 11, 13 ou 15 à 25, caractérisé par le fait que les zones périphériques extérieures des câbles (6, 27), qui subsistent à l'extérieur des chambres de réception (7, 8, 12, 25, 30, 34) de l'organe de remplissage (3, 11, 18, 29, 33), sont entourées par le tube (1).

27. Manchon pour câbles, suivant l'une des revendications précédentes, caractérisé par le fait que la paroi de fermeture (40, 28, 38) de l'organe de remplissage (3, 11, 18, 29, 33) est disposé au centre de l'organe de remplissage (3, 11, 18, 29, 33).

28. Manchon pour câbles, suivant l'une des revendications précédentes, caractérisé par le fait que plusieurs organes de remplissage (3, 11, 18, 29, 33) sont réunis de manière à former des introductions multiples, les organes de remplissage (3, 11, 18, 29, 33) étant disposés de manière à s'engager les uns dans les autres par leurs bords longitudinaux.

**FIG 1**

**FIG 2**

**FIG 3**

**FIG 4**

**FIG 5**

FIG 6

FIG 7

FIG 8

FIG 9

FIG 10

FIG 11